# EUROPEAN PATENT APPLICATION

(11) **EP 2 020 581 A1**
(43) Date of publication of application: **04.02.2009**
(21) Application number: 07113822.6
(22) Date of filing: 03.08.2007
(51) Int. Cl.: F26B 21/04, F26B 21/12, F26B 9/06

(54) **Plant and process for the controlled dehumidification of granular material**

(71) Applicant: Moretto S.P.A., 35010 Massanzago (Padova) (IT)
(72) Inventor: Moretto, Renato, 35010, Massanzago - Padua (IT)
(74) Representative: Reniero, Cirillo Silvano

(57) **Abstract**

The present invention relates to a dehumidification plant for granular material, comprising:
- at least one dehumidification hopper or silo container (T1, T2, ... Tn) having at least one loading mouth (BC1, BC2, ... BCn) and one discharge mouth (BS1, BS2, ..., BSn) of granular material (MG1, MG2,..., MGn), at least one inlet duct (CE1, CE2, ..., CEn) of a hot, dry gaseous processing fluid medium for each hopper (Ti, T2, ..., Tn), and at least one discharge duct (CS1, CS2, ..., CSn) of moisture-loaded treatment fluid medium for each hopper;
- at least one generator group (DR) of hot, dry gaseous processing or treatment fluid medium, which can be supplied by the at least one discharge duct (CS1, CS2, ..., CSn);
- at least one pressurization means (SF) connected in input to the at least one generator group (DR) and set to pressurize the gaseous fluid medium generated by the at least one generator group (DR) as well as feed it in parallel to each hopper (Ti, T2, ..., Tn) through a respective inlet duct (CE1, CE2, ..., CEn);
- a programmable control unit (CPU); and
- a flow intensity adjustment device of the gaseous processing or treatment fluid medium supplied into each inlet duct (CE1, CE2, ..., CEn), each flow intensity adjustment device comprising at least one valve means (VM1, VM2, ..., VMn) controllable by the programmable control unit (CPU),
the flow intensity adjustment device of the gaseous fluid medium comprising at least one valve means (VMR1, VMR2, ..., VMRn) controllable by the programmable control unit (CPU) and arranged in each discharge duct (CS1, CS2, ..., CSn).

## Description

The present invention regards a plant and process for distributing, in a controlled manner, a gaseous processing medium for dehumidifying hygroscopic granular materials, e. g. plastic material granules.

With the term "granules" or "granular", it is also intended to indicate, in the present description and claims, the small flakes, sheets or plates produced by the grinding-crushing of plate, sheet, membrane or film plastic material and the like.

In every transformation process of granular plastic materials, a dehumidification process is of high importance, especially before the granular material itself undergoes a high temperature fusion step. In the dehumidification process, all the water contained or associated with the plastic material granules, in particular when dealing with hygroscopic plastics, is removed.

The elimination of the moisture content of the granular material is necessary, since during the softening and fusion steps the water would penetrate into the molecular chains of the polymers and break them, which would lead to the formation of surface defects, pitting and non-uniform structure and coloring of the manufactured item, with the obtainment of a transformed plastic having poor mechanical characteristics.

Granular plastic materials, when subjected to a dehumidification process, are normally stored in one or more hoppers, each associated with a generator device of hot, dry air, called "dryer" in jargon, such that the hoppers are fed by insufflation of hot, dry air from said dryer.

In the dehumidification plants known at the state of the art, the processing air, i. e. the hot, dry air generated by the dryer, is sent through a common duct to the various partitions, each of which leads into a respective hopper, in other words the various hoppers are fed in parallel by a single dryer.

The hot, dry and pressurized processing air which enters into each hopper is forced to cross through the granular material contained therein, transferring heat and thus removing moisture from the granular material to within a predetermined drying value. The air, no longer dry and less hot, is discharged from each hopper into a common outlet duct.

The dehumidification of the granular material contained in each hopper depends on multiple factors, such as the granulometry and the density of the material to be dehumidified, the residence time of the material within the hopper, the speed of the processing air which crosses the material in the hopper and many other factors which are closely connected to the nature of the polymers and also to the thermodynamic variables of the processing air.

One of the most critical parameters for the obtainment of the desired dehumidification or drying level of the granular material consists of the speed of the processing air which crosses through the material in each hopper. The control and adjustment of the air speed is indeed critical for the obtainment of high quality products manufactured from the treated granular material. If, in fact, the dehumidification or drying plant of the granular material comprises a high number of hoppers, it would be extremely difficult to ensure the correct air flow at the inlet of each hopper, since the supply of the air in parallel provides air at the same pressure to all hoppers, independent of the type of material contained in each hopper and of many other factors, as mentioned above.

In the plants known up to the present, the adjustment of the pressure of the processing air entering each hopper is carried out by utilizing a manual valve, adjusted each time by the operator as a function of the size of the hopper in question.

In the state of the art, other solutions have also been proposed to monitor the flow in the feed ducts of the various hoppers, e. g. devices containing one or more baffles, which change angular orientation as a function of the thrust applied thereto by the processing air flow, also giving a visual indication, albeit approximate, of the air quantity which flows through a given duct. Based on this approximate indication, the operator manually adjusts the valve.

A solution of this type involves a great number of drawbacks, such as a necessarily approximate adjustment of the air speed which crosses through the material within each hopper, the hard-to-repeat nature of the adjustment and the inevitable errors by the operator. In addition, a purely manual adjustment, and consequently approximate adjustment of the flow almost always leads to the need to oversize the dryer, which naturally involves a significant increase of both the plant and operation costs, if only for an inevitable increased energy consumption.

On the other hand, assuming that one is able with some complex device to obtain a precise and correct adjustment of the speed of the air which flows into the inlet duct of each hopper, such adjustment would be insensitive to variations in the type of granular material to be treated, fed into each hopper. In modern plants, in fact, the dehumidification hoppers are normally filled every 4-6 hours with a different type of granular material. It is quite clear, then, that for every changing operation of the granular material type to be treated, one must proceed with a new manual adjustment of the air flows into the various processing air inlet ducts in the hoppers, which involves a considerably lengthening of the down times or dwell times of the plant with consequent lowering of the productivity of the plant itself.

The main object of the present invention is to provide a dehumidification plant capable of precisely controlling the speed of a gaseous fluid medium for the treatment of granular material contained in one or more dehumidification hoppers and as a function of the specific characteristics of a given granular material to be dehumidified.

Another object of the present invention is to provide a dehumidification plant for granular material equipped with adjustment devices of the speed of the gaseous fluid medium which are substantially unaffected by variations of the fluid-dynamic parameters of the gaseous fluid medium.

Another object of the present invention is to provide a process for the automatic adjustment of the speed of the gaseous treatment fluid medium for the dehumidification of granular materials; the adjustment can be carried out based on the specific requirements and characteristics of the granular material to be dehumidified.

Not least object of the present invention is to provide a dehumidification plant and process which require significantly lower energy costs and consumptions with respect to the dehumidification processes and plants proposed up to now.

According to a first aspect of the present invention, a dehumidification plant for granular material is provided, comprising
- at least one dehumidification hopper or silo container having at least one loading mouth and one discharge mouth of granular material, at least one inlet duct of a hot, dry gaseous processing fluid medium for each hopper, and at least one discharge duct of moisture-loaded treatment fluid medium for each hopper;
- at least one generator group of hot, dry gaseous processing or treatment fluid medium, which can be supplied by the at least one discharge duct;
- at least one pressurization means connected in input to the at least one generator group and set to pressurize the gaseous fluid medium generated by the at least one generator group as well as feed it in parallel to each hopper through a respective inlet duct;
- a programmable control unit; and
- a flow intensity adjustment device of the gaseous processing or treatment fluid medium supplied into each inlet duct, each flow intensity adjustment device comprising at least one valve means controllable by the programmable control unit,
the flow intensity adjustment device of the gaseous fluid medium comprising at least one valve means controllable by the programmable control unit and arranged in each discharge duct.

According to another aspect of the present invention, a dehumidification process is provided for granular material set in at least one silo container or hopper by means of a hot, dry gaseous treatment fluid medium supplied under pressure to each silo container or hopper through at least one respective inlet duct, interceptable by a respective valve means and in fluid communication with a generator-pressurizer group for the gaseous treatment fluid medium, and discharged from each hopper through a respective discharge duct interceptable by a respective valve means to be directed to the generator-pressurizer group, the valve means in each inlet duct, the valve means in each discharge duct and the generator-pressurizer group being controllable by a programmable control unit,
the process comprising the steps of:
characterizing the pressure-microstep curve for each valve means,
storing, in the programmable control unit, parameters regarding the characterization as well as specific dehumidification parameters for each material planned to be dehumidified,
feeding of hot, dry and pressurized gaseous treatment fluid medium by the generator-pressurizer group into at least one hopper,
measuring the pressure differential in every inlet duct of gaseous fluid medium across each valve means directed to each hopper and sending corresponding input signals to the programmable control unit,
comparing data concerning the measurement of the pressure differential in every inlet duct to generate corresponding output control signals in the control unit, and
sending of at least one control signal to at least one of the valve means in each inlet duct by the programmable control unit, to control the speed of the gaseous treatment fluid medium entering the respective hopper.

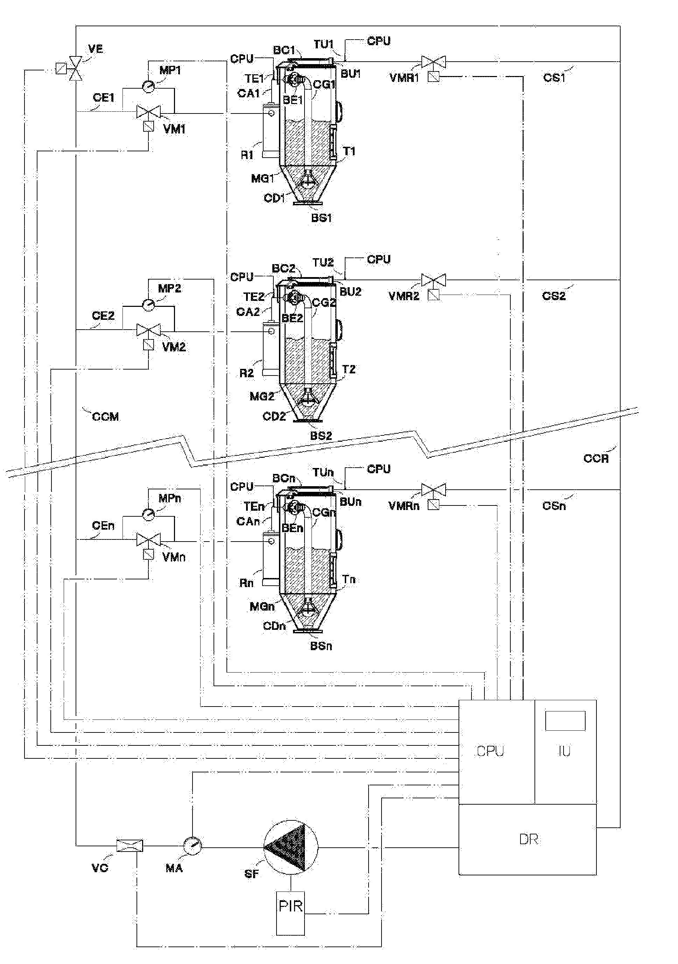

Further aspects and advantages of the present invention will appear clearer from the following detailed description of a currently preferred embodiment thereof, illustrated as merely exemplifying and non-limiting example in the accompanying drawing set, in which the only figure is a schematic illustration of a granular material dehumidification plant according to the present invention.

With particular reference to the Figure, a dehumidification plant for granular materials according to the present invention comprises a plurality of hoppers or silo containers T1, T2,..., Tn intended to contain a respective granular material MG1, MG2,..., MGn to be dehumidified which can be a material of the same type or a different material from one hopper to the other, e. g. differing by composition and/or granulometry, and thus having different dehumidification parameters, such as, for example, the residence time in the respective hopper, the supply speed of the gaseous fluid medium and many others, all closely connected to the parameters of diffusion in the polymers.

Each hopper T1, T2, ..., Tn has, as is normal at the state of the art, an upper loading mouth BC1, BC2, ... BCn for the granular material to be dehumidified, a bottom with walls tilted towards a lower discharge mouth BS1, BS2, ..., BSn for the dehumidified granular material, which is interceptable by a suitable meter or extractor device (not shown in the drawing) in turn designed to supply a respective dehumidified granular material transforming machine (it too not shown in the drawing since it is not part of the present invention). At the top, each hopper T1, T2, ..., Tn moreover has a gaseous treatment fluid inlet mouth BE1, BE2, ..., BEn, i.e. usually dry (dehumidified), relatively hot and pressurized air, and an outlet mouth BU1, BU2, ..., BUn, which directly communicates with one end of a duct CS1, CS2, ..., CSn for the discharge of the gaseous treatment fluid loaded with moisture and relatively cool.

In each discharge duct CS1, CS2, ..., CSn, a temperature probe TU1, TU2, ..., TUn is inserted, electrically connected to a programmable electronic control unit CPU.

Each inlet mouth BE1, BE2, ..., BEn is in fluid communication, on one side, with a respective gaseous process or treatment fluid intake duct CA1, CA2, ..., CAn, in which a respective temperature probe TE1, TE2, ..., TEn is provided, electrically connected to the programmable electronic control unit CPU, and, on the other side, it is in direct fluid communication with a preferably elbow-shaped duct CG1, CG2, ..., CGn, which, in use, enters into the granular material present in the respective hopper and ends on its lower part with a diffuser cone CD1, CD2, ..., CDn with a number of outlet holes for the gaseous treatment fluid, so to direct multiple jets in a number of directions in the lower zone of the hopper and thus in the lower zone of the granular material MG1, MG2, ..., MGn to be dehumidified stored therein.

The dehumidification plant moreover includes a gaseous treatment fluid medium generator group DR, called dryer in jargon, which can be of any suitable type, e. g. comprising coaxial dehumidification towers, as disclosed e. g. in patent US-7 188 434 B2 in the name of the applicant of the present application. The gaseous treatment fluid exits from the dryer DR at a pre-established temperature to enter into a pressurization device before being fed to a common delivery duct CCM. Such pressurization device can be for example a blower or electric fan SF of any suitable type, equipped with adjustment means of the pressurization intensity, e. g. adjustment means of the blower's rotation speed, such as a so-called inverter PIR, of any suitable type set to control the electric motor (not shown) of the blower. Possibly, the blower or electric fan can be arranged inside the dryer DR.

From the common delivery duct CCM, the hot, dry and pressurized gaseous treatment fluid is divided, in a manner which will be described in more detail below, based on the requirements of the various inlet ducts CE1, CE2, ..., CEn of the hoppers, ducts connected in parallel with each other. In each inlet duct CE1, CE2, ..., CEn, a motorized valve VM1, VM2, ..., VMn is arranged, of any suitable type, such as for example of butterfly or sphere type, placed upstream of a respective intake duct CA1, CA2, ..., CAn and controllable by the programmable electronic unit CPU, as well as a differential pressure meter MP1, MP2, ..., MPn, connected across or in parallel with a respective motorized valve VM1, VM2, ..., VMn and set to measure the fall of pressure caused by the adjustment valve. The measured value is converted into a corresponding signal, which is sent in input to the programmable electronic control unit CPU.

Once it has crossed the motorized valve, the gaseous treatment fluid medium enters into the respective intake duct CA1, CA2, ..., CAn after having crossed through a respective heating means R1, R2, ..., Rn of any one suitable type adapted to further increase the temperature of the gaseous treatment fluid, if the needs of the specific material to be dehumidified require it. The gaseous treatment fluid therefore crosses the inlet mouth BE1, BE2, ..., BEn and exits from the diffuser cone CD1, CD2, ..., CD so to be diffused into all of the granular material MG1, MG2, ..., MGn and to dehumidify such material by transferring heat thereto, in order to remove water molecules until a pre-established dehumidification level is attained. The treatment fluid is then discharged when "spent", i.e. loaded with moisture and relatively cool, through the outlet mouth BU1, BU2, ..., BUn.

If for any reason an alteration is produced (anomalous loss of load) in the treatment (air) fluid flow, e. g. following the formation of an obstruction within an intake duct CA1, CA2, ..., CAn after the deposit on a duct's inner wall of several layers of powder brought by the treatment fluid, this situation is detected by the affected differential pressure meter MP1, MP2, ..., MPn, which will send a control signal in input to the control unit CPU, which in turn will send a control signal to the respective motorized valve VM1, VM2, ..., VMn, so that the latter will consequently adjust the flow rate of the gaseous treatment medium through it.

The exiting spent gaseous fluid is directed into a common return duct CCR through respective discharge ducts CS1, CS2, ..., CSn, in which a motorized valve VMR1, VMR2, ..., VMRn is provided for of any suitable type, e. g. of butterfly or ball type, controllable by the programmable electronic unit CPU to return to the dryer DR and start the work cycle again.

In the common delivery duct CCM, a pressure meter MA is also advantageously provided for of any suitable type, as well as a gaseous fluid flow rate meter VC, also of any suitable type, as is known practice at the state of the art, both meters MA and VC being electrically connected with said programmable control unit CPU.

The dehumidification plant for granular materials according to the present invention moreover includes a user's interface IU, which typically comprises a video unit and access or data insertion means, such as a keyboard and a mouse, in the programmable control unit CPU. Preferably, the user's interface IU is a graphical object interface of touch-screen type.

For the optimal functioning of a plant according to the present invention, as described above, it is necessary to carry out a first step of calibration or initialization, consisting of the characterization of the motorized valves, i.e. a mathematical modeling executable through a fit of the valve's characteristic curve, having on the x-axis the microsteps of the movement of opening degree of the motorized valve and on the y-axis the corresponding detected pressure value of the gaseous treatment medium. Such data is stored in a first storage portion of the program control unit CPU for every type of material for which the plant is prearranged to dehumidify, including the parameters regarding the granulometry, the weight and still others closely connected with the level of dehumidification to attain for each granular material.

After the calibration, the operator can select through the user's interface IU the most suitable program for every single hopper intended to dehumidify a specific granular material to be treated, for which the programmable control unit CPU was programmed, i.e. for which there was stored therein respective treatment parameters, such as the treatment temperature, the safety temperature, the minimum residence time in the hopper, the ratio between gaseous treatment fluid flow rate and granular material weight, as well as the hourly flow rate of the granular material to be treated.

The program control unit CPU will then send a respective control signal to the various motorized valves VM1, VM2, ..., VMn, which are positioned with a specific opening degree or level, in a manner such to obtain a correct speed of the gaseous treatment fluid in the respective inlet ducts CE1, CE2, ..., CEn. Moreover, thanks to the pressure differential meters MP1, MP2, ..., MPn in association with the pressure meter MA placed in the common delivery duct CCM, it is possible to monitor the pressure level in every inlet duct CE1, CE2, ..., CEn as well as obtain a constant adjustment upon variation of the surrounding conditions, i.e. in the operating conditions in one or more of the plant hoppers, e. g. a sudden increase of the gaseous treatment fluid quantity supplied by the dryer DR and/or a temporary exclusion from the process of one or more hoppers T1, T2, ..., Tn, with consequent increase of the flow rate and pressure of the gaseous treatment fluid through the plant.

One such variation will be detected and measured by the differential pressure meters MP1, MP2, ..., MPn, which will send a corresponding electric control input signal to the programmable electronic control unit CPU. The unit CPU, in turn, will recalculate the exact degree or level of opening of the respective motorized valves VM1, VM2, ..., VMn and will send a new electronic control signal to them. The motorized valves VM1, VM2, ..., VMn will be repositioned by assuming a new orientation through a microstep variation corresponding to the opening degree or level calculated by the CPU unit. In this manner, the speed of the gaseous treatment fluid which crosses the various masses of granular material MG1, MG2, ..., MGn set within the respective hoppers will always be the desired and pre-established speed.

It is worth to remember that the differential pressure meters MP1, MP2, ..., MPn measure a drop of pressure across the respective motorized valves, a drop which is directly proportional to the square of the speed of the gaseous treatment fluid which flows into the inlet ducts CE1, CE2, ..., CEn. The measuring of the gaseous treatment fluid speed carried out in this manner has the advantage of being economical and above all is less affected by undesired variations of fluid-dynamic parameters - such as for example occurs at the rise of vortical motion, which can be produced due to a duct narrowing - with respect to other conventional measurement techniques.

The operator is also capable of managing increases of gaseous treatment fluid flow caused by variations of the surrounding area, based on the requirements of the granular material MG1, MG2, ..., MGn, being able to choose between proportionally distributing the excess gaseous flow to each hopper flow in use or discharging the excess gaseous flow directly into the common return duct CCR by means of a valve VE, which can be of any suitable type, either manual or motorized.

Alternatively, due to the presence of the rotation speed variation device PIR of the pressurization means SF, such increases can also be managed by controlling the rotation speed variation device PIR through the control unit CPU.

When a very significant pressure drop has been detected for each hopper in use with respect to the pre-established value, the programmable control unit CPU will send a control signal to the rotation speed variation device PIR, which by acting directly on the pressurization means SF will provide to automatically diminish the flow of the gaseous treatment fluid fed to the common delivery duct CCM, thus obtaining also a considerable energy savings.

Moreover, the rotation speed variation device PIR of the pressurization means SF can adjust the gaseous fluid flow in the common delivery duct CCM based on the characteristics of the material to be dehumidified, speeding up or slowing down the delivery flow depending on whether the materials are more or less sensitive to thermal gradients.

Another problem consists of possible variations of the thermal gradient to which the granular material is subjected at the different levels reached by crossing through the respective hopper, a phenomenon which could result harmful for said granular material if not appropriately controlled.

For this reason, each hopper comprises two temperature sensors TE1, TE2, ..., TEn and TU1, TU2, ..., TUn, which respectively measure the temperature in the intake duct CA1, CA2, ..., CAn and in the discharge duct CS1, CS2, ..., CSn.

The programmable control unit CPU receives the same number of temperature input signals, which are processed and compared with temperature and granulometry values already stored for every type of granular material to be treated. The programmable control unit CPU, based on the comparison carried out, will send (if the plant operating conditions require), a control signal to the motorized valves VMR1, VMR2, ..., VMRn, which will consequently reduce the passage opening of the gaseous treatment fluid by a pre-established value. At the same time, the motorized valves VM1, VM2, .., VMN will be controlled to modify their opening orientation, in a manner such that the material MG1, MG2, ..., MGn contained in the respective hopper T1, T2, ..., Tn is always crossed by a gaseous treatment fluid which flows at an optimal speed.

A further degree of flexibility of the above-described dehumidification plant is attainable if the programmable control unit CPU comprises a memory portion set to store parameters and treatment characteristics concerning further materials defined as experimental materials, as disclosed in the patent application IT-VR2006A000030 in the name of the same applicant of the present invention.

In such case, the controlled distribution of gaseous treatment fluid in the dehumidification method or process according to the present invention comprises an initialization step, in which the operator by means of the user's interface IU of the programmable control unit CPU stores data regarding the various hoppers T1, T2, ..., Tn and a calibration step described in more detail below.

Once a calibration command is selected by means of the user's interface IU, the programmable control unit CPU will completely open all of the motorized valves VM1, VM2, ..., VMn. Subsequently, the same valves will be gradually closed, storing the differential pressure values ΔP corresponding to the various motorized valves and comparing them with the respective flow rate values detected by a flow rate meter VC of the gaseous treatment fluid provided for in the common delivery duct CCM for each closed step of the motorized valves.

In this manner, for every ΔP value for each hopper inlet duct CE1, CE2, ..., CEn one will always know the corresponding value of the required gaseous treatment fluid to be fed to the common delivery duct CCM, and consequently at every reading of ΔP for each hopper inlet duct CE1, CE2, ..., CEn the pressurization means SF will increase or decrease the total flow of gaseous fluid in the common delivery duct CCM based on the variations of the surrounding conditions and/or needs of the specific granular material set in the various hoppers T1, T2, ..., Tn.

At the end of this step, the message "calibration terminated" will be advantageously displayed in the user's interface IU display.
If, in the above-described dehumidification plant, one wishes to have an adjustment based on other empirical sizes of the gaseous treatment fluid, these can be added or substituted in place of the differential pressure meters.

Thus, for example, a plant according to the present invention could be provided with flow rate meters connected in parallel to a respective valve means and set to send control signals in input to the programmable control unit for the selective control of the respective valve means.

Moreover, in the case of maintenance of one or more hoppers T1, T2, ...Tn the programmable control unit CPU will completely close the motorized valves VM1, VM2, ..., VMn and VMR1, VMR2, ..., VMRn in the circuit comprising the hoppers in question, in such a manner as to isolate them, preventing the exit of gaseous treatment fluid. Thus there will also be advantages in terms of safety for the operator and in energy savings.

The invention as described above is susceptible to numerous modifications and variations within the protective scope as defined by the contents of the claims.

## Claims

1. A dehumidification plant for granular material, comprising:
- at least one dehumidification hopper or silo container (T1, T2, ... Tn) having at least one loading mouth (BC1, BC2, ... BCn) and one discharge mouth (BS1, BS2, ..., BSn) of granular material (MG1, MG2,..., MGn), at least one inlet duct (CE1, CE2, ..., CEn) of a hot, dry gaseous processing fluid medium for each hopper (Ti, T2, ..., Tn), and at least one discharge duct (CS1, CS2, ..., CSn) of moisture-loaded treatment fluid medium for each hopper;
- at least one generator group (DR) of hot, dry gaseous processing or treatment fluid medium, which can be supplied by said at least one discharge duct (CS1, CS2, ..., CSn);
- at least one pressurization means (SF) connected in input to said at least one generator group (DR) and set to pressurize said gaseous fluid medium generated by said at least one generator group (DR) as well as feed it in parallel to each hopper (Ti, T2, ..., Tn) through a respective inlet duct (CE1, CE2, ..., CEn);
- a programmable control unit (CPU); and
- a flow intensity adjustment device of the gaseous processing or treatment fluid medium supplied into each inlet duct (CE1, CE2, ..., CEn), each flow intensity adjustment device comprising at least one valve means (VM1, VM2, ..., VMn) controllable by said programmable control unit (CPU),
***characterized in that*** said flow intensity adjustment device of the gaseous fluid medium comprises at least one valve means (VMR1, VMR2, ..., VMRn) controllable by said programmable control unit (CPU) and arranged in each discharge duct (CS1, CS2, ..., CSn).

2. Plant according to claim 1, **characterized in that** each flow intensity adjustment device comprises a respective differential pressure meter (MP1, MP2, ..., MPn), which is connected in parallel to a respective valve means (VM1, VM2, ..., VMn) and set to send control signals in input to said programmable control unit (CPU) for the selective control of the respective valve means (VM1, VM2, ..., VMn).

3. Plant according to any preceding claim, **characterized in that** each hopper (T1, T2, ..., Tn) comprises a respective intake duct (CA1, CA2, ..., CAn) of said treatment fluid medium placed downstream of a respective valve means (VM1, VM2, ..., VMn), a respective discharge duct (CS1, CS2, ..., CSn) for said treatment fluid medium, at least two temperature sensors (TE1, TE2, ..., TEn and TU1, TU2, ..., TUn) set to detect the temperature in a respective intake duct (CA1, CA2, ..., CAn) and to send input control signals to said programmable control unit (CPU) to obtain, in output from said programmable control unit, control signals correlated with data stored in said programmable control unit (CPU) and intended to selectively control respective valve means (VMR1, VMR2, ..., VMRn), thereby adjusting the gaseous treatment fluid flow exiting from the respective hopper.

4. Plant according to any preceding claim, **characterized in that** each intake duct (CA1, CA2, ..., CAn) comprises a respective heating means (R1, R2, ..., Rn) set to raise the temperature of the gaseous treatment fluid medium.

5. Plant according to any preceding claim, **characterized in that** it comprises a common delivery duct (CCM) which can be supplied by said at least one generator (DR) and in fluid communication with each inlet duct (CE1, CE2, ..., CEn), and a common return duct (CCR) in fluid communication with each discharge duct (CS1, CS2, ..., CSn) and set to feed said generator group (DR).

6. Plant according to any preceding claim, **characterized in that** said pressurization intensity adjustment means (PIR) comprise an inverter device set to control electric motor driving means for said generator group (DR).

7. Plant according to claim 5 or 6, **characterized in that** it comprises a flow rate meter means (VC) of gaseous treatment fluid medium, electrically connected to said programmable control unit (CPU).

8. Plant according to any one of the claims 5 to 7, **characterized in that** it comprises a pressure meter means (MA) of gaseous treatment fluid medium, electrically connected to said programmable control unit (CPU).

9. Plant according to any preceding claim, **characterized in that** said programmable control unit (CPU) comprises a user's interface (IU).

10. Plant according to any preceding claim, **characterized in that** each flow intensity adjustment device comprises a respective flow rate meter, which is connected in parallel to a respective valve means (VM1, VM2, ..., VMn) and set to send control signals in input to said programmable control unit (CPU) for the selective control of the respective valve means (VM1, VM2, ..., VMn).

11. A dehumidification process for granular material (MG1, MG2, ..., MGn) set in at least one silo container or hopper (T1, T2, ..., Tn) by means of a hot, dry gaseous treatment fluid medium supplied under pressure to each silo container or hopper through at least one respective inlet duct (CE1, CE2, ..., CEn), interceptable by a respective valve means (VM1, VM2, ..., VMn) and in fluid communication with a generator-pressurizer group (DR, SF) for the gaseous treatment fluid medium, and discharged from each hopper through a respective discharge duct (CS1, CS2, ..., CSn) interceptable by a respective valve means (VMR1, VMR2, ..., VMRn) to be directed to said generator-pressurizer group, said valve means (VM1, VM2, ..., VMn) in each inlet duct, said valve means (VMR1, VMR2, ..., VMRn) in each discharge duct and said generator-pressurizer group being controllable by a programmable control unit (CPU),
**characterized in that** it comprises the steps of:
characterizing the pressure-microstep curve for each valve means (VM1, VM2, ..., VMn),
storing, in said programmable control unit (CPU), parameters regarding said characterization as well as specific dehumidification parameters for each material planned to be dehumidified,
feeding of hot, dry and pressurized gaseous treatment fluid medium by said generator-pressurizer group (DR, SF) into at least one hopper (T1, T2, ..., Tn),
measuring the pressure differential (ΔP) in every inlet duct (CE1, CE2, ..., CEn) of gaseous fluid medium across each valve means (VM1, VM2, ..., VMn) directed to each hopper and sending corresponding input signals to said programmable control unit (CPU),
comparing data concerning said measurement of the pressure differential (ΔP) in every inlet duct (CE1, CE2, ..., CEn) to generate corresponding output control signals in said control unit, and
sending of at least one control signal to at least one of said valve means (VM1, VM2, ..., VMn) in each inlet duct by said programmable control unit (CPU), to control the speed of said gaseous treatment fluid medium entering the respective hopper (T1, T2, ..., Tn).
